# EUROPEAN PATENT APPLICATION

(11) **EP 4 807 575 A1**
(43) Date of publication of application: **16.09.2026**
(21) Application number: 26164060.1
(22) Date of filing: 11.03.2026
(51) Int. Cl.: G06F 16/21

(54) **DATA LAYER FOR ARTIFICIAL INTELLIGENCE NATIVE DATA PLATFORM**

(30) Priority: 13.03.2025 US 202519079451
(71) Applicant: Intuit Inc., Mountain View, CA 94043 (US)
(72) Inventor: KUMAR, Sricharan Kallur Palli, Mountain View, 94043 (US); SRIVASTAVA, Ashok N., Mountain View, 94043 (US); SWAMINATHAN, Krithika, Mountain View, 94043 (US); BAKER, Tristan Cooper, Mountain View, 94043 (US)
(74) Representative: D Young & Co LLP

(57) **Abstract**

A method includes adding lineage metadata to a dataset of data records. The method further includes obtaining permitted data access operations of the dataset of data records from a registered data access policy. The method further includes evaluating, responsive to a write operation being permitted to the dataset of data records, the dataset of data records against registered data schemas to determine a compliance of the dataset of data records to the at least one registered data schema. The method further includes obtaining, responsive to the dataset of data records being compliant with the at least one registered data schema, at least one registered query pattern of the dataset of data records. The method further includes determining, from the at least one registered query pattern, a storage location for the dataset of data records. The method further includes storing the dataset of data records in the storage location.

## Description

### BACKGROUND

Enterprises with software product offerings in various domains such as personal finance and taxes, healthcare, learning platforms, *etc.* may produce vast amounts of data over time. Additionally, when these enterprises acquire software businesses and integrate the acquired software products into their product offerings, the amount of data may further increase. Data may be "siloed" into specific application domains. The separation of enterprise data into siloed domains, managed by distinct data management systems may cause delays in adapting to emerging data trends. The lack of a unified data platform that is accessible across application domains may cause delays in building custom solutions, or innovating existing software products to leverage data across application domains.

The siloed data may exist in different data modalities, such as documents, database records, unstructured data, image data, voice data, *etc..* Consolidation of the distinct data management systems of the siloed data may not be an automatable process. Likewise, unifying data of diverse modalities may not be an automatable process. Identifying bottlenecks, failures, and root causes in consolidated systems may entail manual work. Thus, several technical challenges arise in automating the ingestion and integration of different modalities of data from different application domains to a unified data platform. Further, technical challenges arise in standardizing and automating common orchestration patterns for query optimization, data serving, data movement, *etc..*

### SUMMARY

Particular aspects are set out in the appended independent claims. Various optional embodiments are set out in the dependent claims. In general, in one aspect, one or more embodiments relate to a method. The method includes adding lineage metadata to a dataset of data records. The method further includes obtaining permitted data access operations of the dataset of data records from a registered data access policy. The method further includes evaluating, responsive to a write operation being permitted to the dataset of data records, the dataset of data records against at least one registered data schema to determine a compliance of the dataset of data records to the at least one registered data schema. The method further includes obtaining, responsive to the dataset of data records being compliant with the at least one registered data schema, at least one registered query pattern of the dataset of data records. The method further includes determining, from the at least one registered query pattern, a storage location for the dataset of data records. The method further includes storing the dataset of data records in the storage location.

In general, in one aspect, one or more embodiments relate to a method. The method includes requesting, via an integrated development environment (IDE), data access permission to a dataset of data records. The method further includes generating, via the IDE, a query for processing the dataset of data records. The method further includes generating, by a universal persistence engine, a query execution plan based on a storage location of the dataset of data records. The method further includes executing, by the universal persistence engine, the query on the dataset of data records to obtain a query result. The method further includes generating, by the universal persistence engine, a materialized view of the query result. The method further includes verifying the query result based on a verification rubric. The method further includes deploying the query to a production system. Upon deployment, the query is executed continuously to process the dataset of data records.

In general, in one aspect, one or more embodiments relate to a system. The system includes at least one computer processor, a data repository, comprising a universal persistence data store, and stored on a physical storage device, and a smart data IDE application executing on the at least one computer processor. The system further includes a universal persistence engine, executing on the at least one computer processor, a data definition tool, executing on the at least one computer processor, and a data understanding tool, executing on the at least one computer processor. The system is configured for adding, by the data understanding tool, lineage metadata to a dataset of data records. The system is further configured for obtaining, by the data understanding tool, permitted data access operations of the dataset of data records from a registered data access policy. The system is further configured for evaluating, by the data definition tool, the dataset of data records against at least one registered data schema to determine a compliance of the dataset of data records to the at least one registered data schema. The system is further configured for obtaining, by the universal persistence engine, at least one registered query pattern of the dataset of data records. The system is further configured for determining, from the at least one registered query pattern, a storage location for the dataset of data records in the universal persistence data store. The system is further configured for storing, by the universal persistence engine, the dataset of data records in the storage location.

Other aspects of one or more embodiments will be apparent from the following description and the appended claims.

### BRIEF DESCRIPTION OF DRAWINGS

FIG. 1 shows a computing system, in accordance with one or more embodiments.
FIG. 2 shows a flowchart of a method of data ingestion from diverse data sources into the data layer of an AI native data platform.
FIG. 3 shows a flowchart of a method of data retrieval from the data layer of an AI native data platform, in accordance with one or more embodiments.
FIG. 4 shows an example of a workflow, in accordance with one or more embodiments.
FIGS. 5A and 5B show a computing system, in accordance with one or more embodiments.
Like elements in the various figures are denoted by like reference numerals for consistency.

### DETAILED DESCRIPTION

One or more embodiments are directed to the data layer of an artificial intelligence (AI)-native data platform. The data layer of the AI-native data platform is a multi-modal persistence system supporting multiple data types and models within a single, integrated backend. The data layer uses AI agents for orchestration of data infrastructure management, query optimization, and data ingestion from the different data sources across application domains. An AI agent is a software entity designed to perform tasks autonomously or semi-autonomously by leveraging advanced AI techniques. AI agents may generate new content, make decisions, and interact with their environment based on the data and models they have been trained on. The AI agents of the data layer continuously monitor and improve data quality during the ingestion process. The AI agents further identify new and/or unidentified logical connections between data entities from different application domains.

Further, the AI agents are used for query analysis and generation of query execution plans for frequently used queries. The query execution plans include automatic infrastructure setup, materialized view generation of query results, and dynamic query routing. Thus, data ingested into the data layer is rendered by the AI agents to be inherently connected, understandable, explainable, and organized. The execution of the frequently used queries is optimized by the AI-agent generated query execution plans. Consumers of the data may then leverage the full breadth of data across the various application domains.

Consumers of the data may access the data layer of the AI-native data platform via an integrated development environment (IDE) to develop various customized solutions, and customer experiences. For example, marketing personnel may create a marketing campaign for a custom solution designed for a specific customer demographic. To create a working prototype for the campaign, the marketing personnel may request access to specific data entities, and indicate the required relationships and logic connections between the data entities by simple commands in natural language or higher-order query languages via the IDE. The data layer may use the AI agents to automatically create a custom data model with the business logic requested by the marketing personnel. The AI agents may be further used to generate and implement one or more query execution plans for the custom data model, including storage optimization of the custom data model, and materialized views of the query results. The materialized views may be used by marketing personnel to generate visualizations for the working prototype of the custom solution. Thus, the development effort may preclude the need for data engineers to orchestrate partitioning, query mapping, materialized views and copies *etc..*

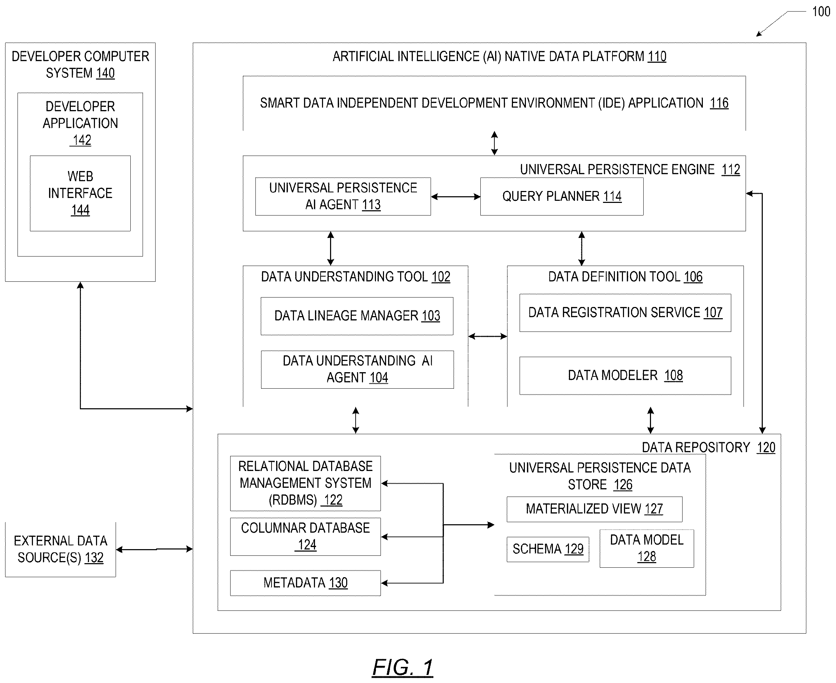

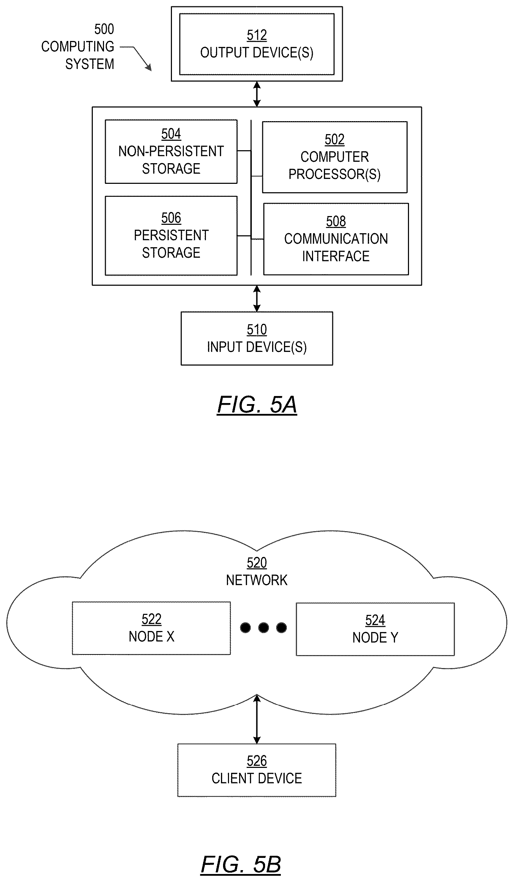

Attention is now turned to the figures. FIG. 1 shows a computing system (100), in accordance with one or more embodiments. The computing system (100) includes an artificial intelligence (AI)-native data platform (110). The AI-native data platform (110) is one or more computer processors, data repositories, communication devices, and supporting hardware and software. The AI-native data platform (110) is configured to execute one or more applications, such as the smart data IDE application (116), the universal persistence engine (112), the data understanding tool (102), and the data definition tool (106). The AI-native data platform (110) may be in a distributed computing environment. The computer processor is one or more hardware or virtual processors which may execute computer readable program code that defines one or more applications, such as the smart data IDE application (116), the universal persistence engine (112), the data understanding tool (102), and the data definition tool (106). An example of a computer system and network that may form the AI-native data platform (110) is described with respect to FIG. 5A and FIG. 5B.

The AI-native data platform (110) includes a data repository (120). The data repository (120) is a type of storage unit or device *(e.g.,* a file system, database, data structure, or any other storage mechanism) for storing data. The data repository (120) may include multiple different, potentially heterogeneous, storage units and/or physical storage devices.

The data repository (120) may include one or more relational database management systems (RDBMS) (122), and columnar databases (124). The data repository (120) may further include other types of data stores, for example, vector stores, graph databases, audio, and video repositories, *etc.* (not shown). Examples of RDBMS(s) include Oracle^{®} Database, MySQL, Microsoft^{®} SQL Server, *etc.* Examples of columnar databases include Amazon RedShift^{®}, Google^{®} BigQuery, Apache Cassandra, *etc.* The RDBMS (122), columnar databases (124), and other data stores in the data repository (120) may store data pertaining to one or more distinct application domains. The application domains may correspond to distinct product suites and services hosted by the enterprise, for external customers and internal users. Thus, the RDBMS (122), columnar databases (124), vector stores, graph databases, audio, and video repositories *etc.,* may collectively be referred to as internal data sources. The applications of the distinct application domains and the customers of these applications may be referred to as "producers" of the data hosted in the internal data sources.

The data repository (120) may further include metadata stores, lineage information, *etc.,* corresponding to the data stores. As shown in FIG. 1, the metadata (130) in the data repository (120) may be representative of the metadata stores and data lineage information. Metadata of a data store refers to data that describes the data in the data store. For example, metadata of an RDBMS or columnar database may include table names, column names, data types, relationships between tables, partitions, indexes, storage formats, *etc.* Metadata may facilitate understanding the structure, constraints, and relationships within a data store. Further, metadata may facilitate efficient management and querying of the data in the data store. Data lineage of a data store refers to the lifecycle of data within a data store. Data lineage information may track data origins, movements, transformations, and destinations within a data store. For example, data lineage information may include references to source systems, databases or external files that are the origin of the data in a data store. Further, data lineage information may include how data in the data store may be processed, such as changes, aggregations, or calculations applied to the data. Furthermore, data lineage information may include the path of the data through different systems, databases, or applications. Additionally, data lineage information may include details of the destination of the data, such as target databases, data warehouses or reporting tools. Data lineage may facilitate an understanding of the data's journey, ensuring data quality, compliance, and transparency. Data lineage information may be used for debugging data issues, auditing, and maintaining data governance.

The data repository (120) may further include a universal persistence data store (126). In one or more embodiments, the universal persistence data store (126) may be a multi-model database. The universal persistence data store (126) includes data ingested from one or more internal data sources, and external data sources (132). The universal persistence data store (126) may include logical representations of various data models corresponding to data ingested from the distinct internal data sources and/or external data sources (132) within a single, integrated, inherently connected data store. The universal persistence data store (126) may be managed by the universal persistence engine (112). Some examples of multi-model databases that store multiple data models within a single integrated back-end include MarkLogic^{®}, ArangoDB^{®}, and Azure^{®} Cosmos DB.

The universal persistence data store (126) may further include one or more materialized views (127). Materialized views (127) are precomputed views of query results that are physically stored in locations in a data repository. In other words, a query result generated by processing a query is stored on a physical storage device, thus making the query result accessible after the query is processed. The one or more materialized views (127) may correspond to one or more query results obtained from querying the universal persistence store data. Thus, the materialized views (127) may facilitate speeding up retrieval of query results by avoiding the need to recompute results for frequently run queries on large datasets.

The universal persistence data store (126) may further include one or more schema(s) (129), and data model(s) (128). The schema(s) (129) and data model(s) (128) may be imported or ingested from the internal data sources and/or the external data sources (132). Further, the schema(s) (129) and data model(s) (128) may include new logical mappings between data elements and/or entities ingested from the internal data sources.

As shown in FIG 1, the system (100) includes one or more external data sources) (132). The external data sources (132) may be similar in architecture and functionality to the internal data sources. However, the external data sources (132) may not be owned or operated by the organization controlling the enterprise in which the AI-native data platform (110) operates. The organization may have a vendor-customer relationship with the entities owning and operating the external data sources (132).

The AI-native data platform (110) includes a data understanding tool (102) and a data definition tool (106). As a brief overview, the data understanding tool (102) and the data definition tool (106) catalog the data ingested from the internal data sources in the data repository (120), and organize the data with a goal of enhanced discoverability by consumers of the data. The cataloged and organized data is received into the universal persistence data store (126). In another aspect, the data being ingested is enriched, by way of generating new connections between different data elements being ingested. Further, the data being ingested may be screened by the data understanding tool (102) and the data definition tool (106) for error detection and correction, filling in of missing values, *etc.* The data understanding tool (102) and the data definition tool (106) may perform operations on the data being ingested in one or more distinct work streams. For example, one workstream may entail error detection, correction, and filling missing values, based on the source and the type of the ingested data. Another workstream may entail the determination of logical connections between data elements ingested from a single data source, or multiple data sources. Further, a logical mapping may be generated, as a new connection between the data elements. The new connection may in turn be recorded in an update to one or more schemas or data models of the universal persistence data store (126). An additional workstream may entail organizing and cataloging the data to facilitate enhanced discoverability for consumers of the data. Consumers refer to users or applications accessing the AI-native data platform via the smart data IDE application (116).

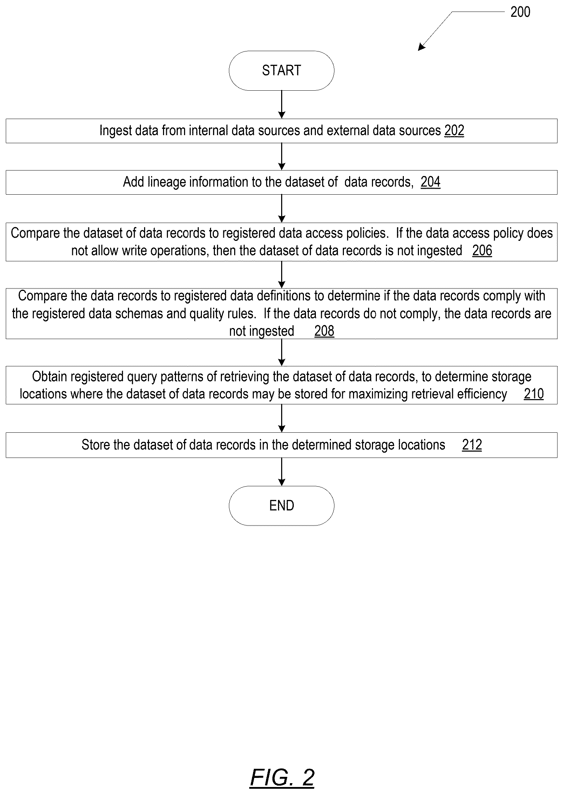

The data understanding tool (102) is software or application hardware, which, when executed by the one or more computer processors, essentially performs a portion of the method of FIG. 2. As shown in FIG. 1, the data understanding tool (102) includes a data lineage manager (103), and a data understanding AI agent (104). However, different architectural arrangements are possible. The data lineage manager (103) is software or application-specific hardware, which, when executed by the one or more computer processors, may process metadata and data lineage information of ingested data into the AI-native data platform (110). The data lineage information may provide information about the origin of the ingested data. The metadata may further provide information about the ingested data that facilitates establishing logical relationships between data ingested from disparate data sources.

As an overview, AI agents are software or application-specific hardware designed to perform tasks autonomously or semi-autonomously using artificial intelligence techniques. AI agents may use generative AI or other AI models as their core computational engine. Through the AI models, AI agents may have capabilities to recognize the environment in which they operate. AI agents may have capabilities to make decisions and accordingly perform operations to achieve specific goals based on the decisions. Notably, AI agents may operate without human intervention, making decisions based on their programming and the data they receive. Further, AI agents may respond to changes in their environment in real-time. Additionally, AI agents may interact with other agents or humans to complete tasks.

Accordingly, the data understanding AI agent (104) is software or application-specific hardware, which, when executed by the one or more computer processors of the AI-native data platform (110), autonomously performs tasks related to data enrichment, data discovery, and data exploration. More particularly, the data understanding AI agent (104) may perform tasks including error correction of ingested data, filling in of missing values, *etc..* The data understanding AI agent (104) may further analyze the ingested data from disparate internal and/or external data sources to "discover" hitherto unestablished relationships between entities of the ingested data. The data understanding AI agent (104) may further generate logical connections between the entities of ingested data, based on the discovered relationships. The ingested data may thus be enriched with new logical mappings between entities of the ingested data. The data understanding AI agent (104) may additionally catalog the enriched and ingested data to facilitate easy retrieval of related data relevant to a data consumer.

The data definition tool (106) is software or application-specific hardware, which, when executed by the one or more computer processors, screens the enriched and ingested data. The ingested, enriched data may be examined for compliance with access control restrictions, service license agreements (SLAs), *etc.* The data definition tool (106) includes a data registration engine (107). The data registration engine (107) may include functionality to analyze antecedents of the ingested and enriched data (origin, data source, compliance rules, *etc*.) to determine whether the ingested and enriched data may be received into the universal persistence data store (126). The data definition tool (106) further includes a data modeler (108). The data modeler (108) may include functionality to compare the ingested and enriched data against registered data definitions. This functionality may include data models, schemas, and quality rules, to ascertain that the ingested and enriched data complies with the registered data definitions. Subject to the ingested and enriched data compliance rules being inclusive of standard operations (for example, read, search, and write operations) of the AI-native data platform, the ingested and enriched data may be received into the universal persistence data store (126). In other words, if the ingested and enriched data compliance rules do not permit certain operations, for example, write operations, then the ingested and enriched data may not be received into the universal persistence data store (126).

The AI-native data platform (110) further includes a universal persistence engine (112). The universal persistence engine (112) is software or application-specific hardware which, when executed by the one or more computer processors, controls, and coordinates ingestion of data from the data repository (120) to the universal persistence data store (126). The universal persistence engine (112) may further analyze frequently used queries on the ingested datasets to determine the flow of data, including intermediate results, temporary storage of query results for large datasets, *etc..* The universal persistence engine (112) may further determine an optimal storage for the dataset being ingested to the universal persistence data store (126), based on the likelihood of the dataset being used to obtain results for frequently used queries.

The universal persistence engine (112) includes a query planner (114). The query planner (114) is software or application-specific hardware, which, when executed by the one or more computer processors, may perform query analysis of frequently used and/or new queries to ascertain the structure and requirements of the queries. Further, the query planner (114) may determine the types of data stores best suited to process different parts of the query. Furthermore, the query planner (114) may optimize the query to access and retrieve the required data efficiently, minimizing resource usage and response time. Additionally, the query planner (114) may create an execution plan to process the query, including data retrieval, transformation, and integration. The query planner (114) may further coordinate the execution of the query across multiple data stores, to ensure the correct combination of partial results from individual data stores.

The universal persistence engine (112) further includes a universal persistence AI agent (113). The universal persistence AI agent (113) may be used by the query planner (114) for various aspects of query planning and data view materialization. For example, the universal persistence AI agent (113) may monitor frequently used queries on the ingested data. The monitored queries may be analyzed by the universal persistence AI agent (113) to determine optimal storage solutions and materialized views. Further, the universal persistence AI agent (113) may recommend and/or implement storage and organization optimizations to the universal persistence data store (126) to improve query performance and data retrieval efficiency. Thus, the universal persistence AI agent (113) may perform predictive analysis of past usage patterns of the data, and infer the likely materialized views of the data. Further, the universal persistence AI agent (113) may cause pre-processing of the frequently used queries to obtain the materialized views of the query results. The materialized views may then be stored in the universal persistence data store (126).

The universal persistence engine (112) may further manage and orchestrate the ingestion of data via the universal persistence AI agent (113). For example, the universal persistence AI agent (113) may connect to the internal data sources and/or external data sources (132). The universal persistence AI agent (113) may extract data from these sources in real-time or at scheduled intervals, and operate, or interact in conjunction with the data understanding AI agent (104) in data analysis and discovery. Additionally, the universal persistence AI agent (113) may incorporate user feedback to continuously improve the data ingestion, analysis, and optimization processes.

In one or more embodiments, consumers of the data in the universal persistence data store (126) may have certain constraints related to cost of retrieval of the data, latency of the data retrieval, and consistency of the data retrieval process. In this scenario, the universal persistence AI agent (113) may process the consumer requirements to generate exact specifications for the underlying infrastructure of the universal persistence data store (126). Namely, the universal persistence AI agent (113) may recommend the optimum storage and retrieval infrastructure of ingested data based on trade-offs across cost, latency, and consistency requirements of the consumers of the ingested data.

The AI-native data platform (110) further includes a smart data IDE application (116). The smart data IDE application (116) is software or application-specific hardware, which, when executed by a computer processor, provides a set of application programming interfaces (APIs) and developer experiences to developers that are consumers of the data present in the universal persistence data store (126). In one or more embodiments, APIs provided by the smart data IDE application (116) may be offered in at least the following categories:
(i) Managing Entity Type APIs, describing the data types that must be managed, documentation related to the data types, and compliance/security metadata;
(ii) Managing Usage Policy APIs, to describe the ways in which the data can and cannot be used, specifically, criteria of actors involved in the processing, storage, or ownership of a data entity type;
(iii) Managing External Data Source APIs, to register an external data source (132) as a provider for values of, part of, or all of, an entity. Further the APIs may expose methods to modify staging and deduplication configurations to enable automated or consumer assisted confirmation of imported data;
(iv) Relationship Detection Between Entities APIs, to enable relationship detection, namely, hitherto unmapped logical connections within a set of entities. Further, for discovery of unknown emergent relationships within the set of entities; and
(v) Registering Queries And Mutations APIs, to describe the queries requiring support, and related operational constraints of cost, latency, and consistency. Specifically, the smart data IDE application (116) may set up a desired data architecture and model and provide a new API endpoint to execute the query.

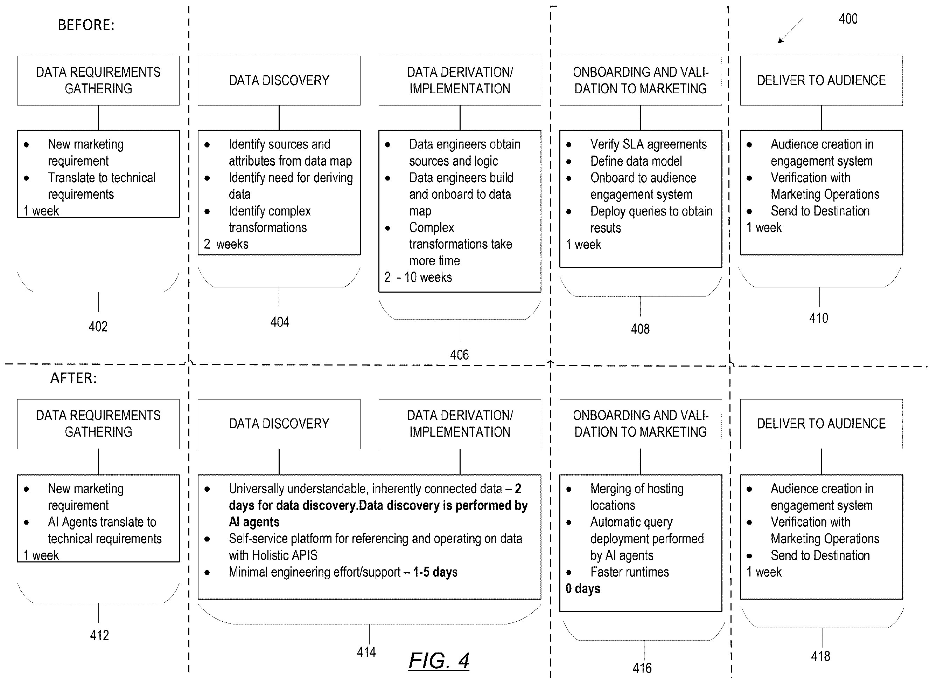

The system shown in FIG. 1 further includes one or more developer computer system(s) (140). The developer computer system(s) (140) may further include developer applications (142) having a web interface (144). The developer application (142) is software or application-specific hardware, which, when executed on a computer processor, operates as a client application to the smart data IDE application (116). The developer computer system(s) (140) may be considered remote or local. A remote computer system refers to a device operated by a third-party that does not control or operate the system of FIG. 1. Similarly, the organization that controls the other elements of the system of FIG. 1A may not control or operate the remote computer system. Thus, a remote computer system may not be considered part of the system of FIG. 1. In contrast, a local computer system is a device operated under the control of the organization that controls the other components of the system of FIG. 1. Thus, a local computer system may be considered part of the system of FIG. 1. In any case, the developer computer system(s) (140) are computing systems (*e.g.,* the computing system (400) shown in FIG. 4A) that communicate with the AI-native data platform (110).

While FIG. 1 shows a configuration of components, other configurations may be used without departing from the scope of one or more embodiments. For example, various components may be combined to create a single component. As another example, the functionality performed by a single component may be performed by two or more components.

FIG. 2 shows a flowchart (200) of a method for ingestion of data into the AI-native data platform, and the access, and use of the data by consumers of the data, in accordance with one or more embodiments. The method of FIG. 2 may be implemented using the system of FIG. 1 and one or more of the steps may be performed on, or received at, one or more computer processors. While the various steps in the flowchart (200) are presented and described sequentially, at least some of the steps may be executed in different orders, may be combined, or omitted, and at least some of the steps may be executed in parallel. Furthermore, the steps may be performed actively or passively.

In Block 202, data is ingested from internal data sources and external data sources. In one or more embodiments, a dataset of data records may be ingested from at least one of an internal data source and an external data source. In one or more embodiments, the universal persistence engine may initiate the ingestion of data from at least one of the internal data source(s), and/or the external data source(s) of FIG. 1, via the data understanding tool.

In Block 204, data lineage information is added to the dataset of data records. In one or more embodiments, the data lineage information may be a part of lineage metadata added to the dataset of data records. In one or more embodiments, the lineage manager of the data understanding tool may obtain metadata and lineage information corresponding to the dataset of data records from a given internal or external data source.

In Block 206, the dataset of data records is compared with registered data access policies. If the data policy does not allow write operations, then the dataset of data records is not ingested. In one or more embodiments, permitted data access operations of the dataset of data records may be obtained from one or more registered data access policies corresponding to the dataset of data records. The one or more registered data access policies may be obtained by the data understanding tool via the data understanding AI agent. The data understanding AI agent may retrieve the registered data access policy(ies) associated with the dataset of data records from the internal or external data source. Further, the data understanding AI agent may ascertain, from analysis of the registered data access policy, constraints of the data access policy related to the dataset of data records. In particular, the data understanding AI agent may ascertain if "write" operations are allowed on the dataset of data records. Responsive to a write operation being permitted to the dataset of data records, the ingestion of the dataset of data records may continue. However, responsive to a write operation not being permitted to the dataset of data records, ingestion of the dataset of data records may be halted.

In Block 208, the data records are compared to registered data definitions to determine if the data records comply with the registered data schemas and quality rules. If the data records do not comply, then the data records are not ingested. In one or more embodiments, the dataset of data records may be evaluated against at least one registered data schema to determine a compliance of the dataset of data records to the at least one registered data schema. More particularly, the evaluation of the dataset of data records may be performed responsive to a write operation being permitted to the dataset of data records, from Block 206. In one or more embodiments, the ingested dataset of data records may be processed by the data definition tool. The data registration engine may compare the dataset of data records with registered data schemas and data models. In one or more embodiments, the registered data schemas and data models may be retrieved by the data modeler of the data definition tool. The comparison operation may be performed with a goal to match the dataset of data records to at least one registered data schema or data model. If a matching registered data schema or data model is found, the dataset of data records is deemed to comply with at least one registered data schema or data model. The registered data schemas and/or data models may include one or more quality rules for the data populating the given schema or data model. For example, field values may have permissible boundaries, or ranges, or types. Certain fields may be required not to be null, or blanks. Thus, the field values of the data records of the dataset may further be evaluated to ascertain compliance with quality rules. In one or more embodiments, responsive to the dataset of data records not being compliant with the (quality rules of) at least one registered data schema, the ingestion of the dataset of data records may be halted. However, if the dataset of data records is found to match at least one registered data schema and the values of the dataset of data records comply with the quality rules of the registered data schema, then the ingestion process may continue.

In Block 210, registered query patterns of retrieving the dataset of data records are obtained, with a goal of determining storage locations where the dataset of data records may be stored for maximizing retrieval efficiency. In one or more embodiments, responsive to the dataset of data records being compliant with the at least one registered data schema, at least one registered query pattern of the dataset of data records may be obtained by the universal persistence engine. Further, the universal persistence engine may determine a storage location for the dataset of data records, based on the at least one registered query pattern.

In Block 212, the dataset of data records may be stored in the determined storage locations from Block 210. In one or more embodiments, the universal persistence engine, may determine, via the universal persistence AI agent, an optimal storage location within the universal persistence data store for the dataset of data records. Further, the universal persistence engine may store the dataset of data records in the optimal storage location.

Blocks 202-212 of the flowchart 200 present steps for ingesting data from internal and/or external data sources and populating the universal persistence data store with the ingested data. Additionally, the ingested data may go through one or more pre-processing steps, for example, error detection and correction. The ingested data may further undergo analysis to identify hitherto undetected logical connections between data entities across disparate data sources. Additional processing may further include updating registered data schemas and data models with the identified logical connections. Processing may further include predictive query optimization, entailing analysis of frequently performed queries against a dataset. Thereby storage of the dataset may be optimized to maximize query execution performance of the frequently performed queries. Further, the frequently performed queries may be executed to obtain query results which may be stored as materialized views. Thus, the flowchart 200 may additionally encompass the steps of data ingestion and pre-processing into a universal persistence data store, managed by the universal persistence engine.

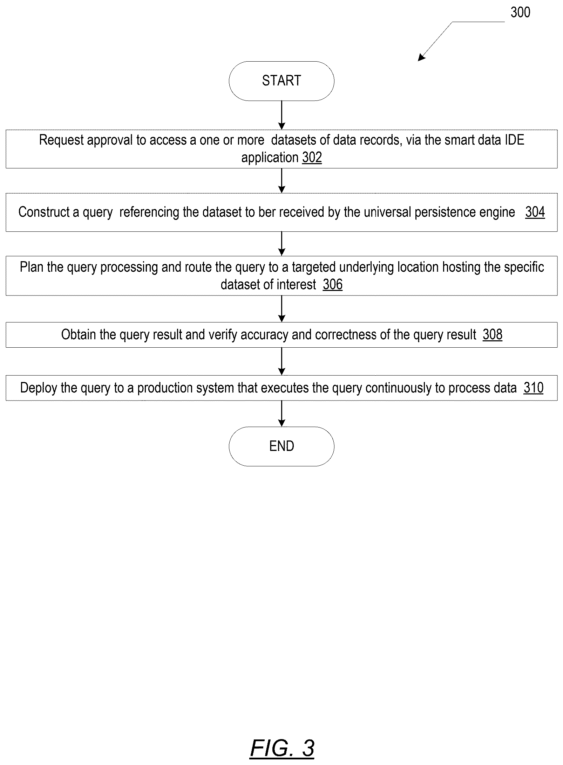

FIG. 3 shows a flowchart (300_ of a method for accessing data from the universal persistence data store by "consumers" or users of the AI-native data platform for use in a production system, in accordance with one or more embodiments. In one scenario, the users of the AI-native data platform may be developers designing custom solutions for customers. The method of FIG. 3 may be implemented using the system of FIG. 1 and one or more of the steps may be performed on or received at one or more computer processors. While the various steps in the flowchart (300) are presented and described sequentially, at least some of the steps may be executed in different orders, may be combined, or omitted, and at least some of the steps may be executed in parallel. Furthermore, the steps may be performed actively or passively.

In Block 302, the consumer may request approval to access one or more datasets of data records via the smart data IDE application. In one or more embodiments, the data access permission to a dataset of data records may be requested. The smart data IDE application is an integrated development environment.

In Block 304, a query referencing the dataset to be received by the universal persistence engine is constructed. In one or more embodiments, the smart data IDE application may generate a query for processing the dataset of data records.

In one or more embodiments, a consumer of the data of the universal persistence data store may access the smart data IDE application from a developer application. The consumer may request access to one or more datasets of data records. The one or more datasets of data records may be identified, or selected, in accordance with requirements of a customized solution for customers of the enterprise. The smart data IDE application may further determine access rules for the datasets of data records. Conditional to the access rules permitting use of the datasets of data records, the consumer may further use the smart data IDE application to construct one or more queries on the datasets of data records. For example, the smart data IDE application may provide a graphical query construction tool. In other examples, consumers may construct queries in a higher-level query language such as SQL, or GraphQL, or in a natural language, via interfaces provided by the smart data IDE application. The smart data IDE application may further process the constructed query input by the consumer to generate a command, or computer program code corresponding to the constructed query.

In Block 306, the query processing is planned. Further, the query is routed to a targeted underlying location hosting the dataset of data records. In one or more embodiments, the command or computer program code generated by the smart data IDE application in Block 304 may be sent to the universal persistence engine as the query to be executed on the datasets of data records. Further, the query directed to the dataset of data records may be obtained by the universal persistence engine. The universal persistence engine may generate a query execution plan, based on a storage location of the dataset of data records. Furthermore, the universal persistence engine may route the query to the storage location of the dataset of data records.

In Block 308, the query result is obtained. Further, the accuracy and correctness of the query result is verified. In one or more embodiments, the universal persistence engine may obtain the query result from the universal persistence data store, by executing the query on the dataset of data records. In one or more embodiments, the universal persistence engine may invoke the universal persistence AI agent to execute the query on the dataset of data records. Further, the universal persistence engine may generate a materialized view of the query result. The materialized view may be stored in the universal persistence data store. Additionally, the universal persistence engine may verify the query result based on a verification rubric, via the universal persistence AI agent. For example, the verification rubric may include requirements for accuracy, completeness, consistency, and integrity. Further, the verification rubric may include guidelines for latency and performance of the query execution.

In Block 310, the query is deployed to a production system that executes the query continuously to process data. In one or more embodiments, the query is deployed to a production system and may be executed continuously to process the dataset of data records, such that the query result is updated with the latest version of the data. Notably, the query result from Block 220 may be verified based on the verification rubric, prior to deploying the query to the production system.

FIG. 4 shows a workflow example (400) for creating a marketing campaign, in accordance with one or more embodiments. The marketing campaign is an example of a workflow for consumers of the AI-native data platform who may be developing a marketing campaign product for engaging with customers. The consumers (e.g., a marketing department of a software company selling financial or healthcare software tools or platforms) may be marketing personnel developing the marketing campaign in accordance with business development goals. The following example is for explanatory purposes only and not intended to limit the scope of one or more embodiments.

Blocks 402 to 410 are representative of principal steps in the workflow for generating a marketing campaign using extant application domain data, schemas, and data models. The data is present in application domain "silos," and may require extensive data engineering and transformation before it is ready to be deployed and delivered to audiences. In other words, Blocks 402-410 are representative of a workflow "before" the development and deployment of the AI-native data platform.

Block 402 shows the first phase, namely gathering the data requirements. A list of some action items that have to be completed in the data requirement's gathering phase, and further, includes a time-frame within which this phase is likely to be completed, namely one week. Block 404 shows the second phase, namely data discovery. The second phase may entail identifying the best sources for the data required by the consumer, and identifying further derived data needs. The required data transformations may be complex in implementation. The second phase, therefore, may likely extend to two weeks. Further, Block 406 shows the third phase, namely data derivation and implementation. The third phase may entail the involvement of data engineers, and further, development of new computer program code to affect the complex transformations of the previous phase. Thus, the time that is likely to be required may vary from two to five weeks. Block 408 shows the fourth phase, namely, onboarding and validation of the marketing campaign, including the deployment of queries directed to the data models generated and populated by the new computer program code of the previous phase. The time that the fourth phase is likely to take is around one week. Finally, Block 410 shows the final phase of delivering the completed marketing campaign to the intended audience, with a likely time of one week. Thus, as shown in FIG. 4, Blocks 402 to 410 may require a minimum of seven weeks, and may be expected to take up to a maximum of sixteen weeks.

Blocks 412 to 418 are representative of the principal steps in the workflow for generating a marketing campaign using the AI-native data platform. The data from several application domains is ingested into a universal persistence data store, managed by a universal persistence engine. In the ingestion process, the data is pre-processed by the data understanding tool and the data definition tool. The data in the universal persistence data store is connected, unified, secure and regulatory/SLA compliant. In other words, Blocks 412-418 are representative of a workflow "after" the development and deployment of the AI-native data platform.

In Block 412 showing the data requirement's gathering phase, the action items are the same as shown in Block 402, and the likely time requirement remains the same. In Block 414, the phases of data discovery and data derivation/implementation show a reduction of effort and likely time taken, based on the usage of the AI-native data platform. The likely time for Block 414 (shown in bold text) amounts to a maximum of seven days and a minimum of five days, compared to Blocks 404 and 406, which are likely to take a minimum of four weeks and a maximum of twelve weeks. A likely time reduction is shown in Block 416 in the onboarding and validation phase, taking 0 days compared to Block 408, which shows a likely time of one week. Finally, Block 418 is shown to take the same likely time as Block 410.

Thus, as shown in the "before" and "after" workflows of FIG. 4, the likely time to create a new marketing campaign is reduced from seven - sixteen weeks, to four days - fifteen days with the AI-native data platform.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 5A, the computing system (500) may include one or more computer processor(s) (502), non-persistent storage device(s) (504), persistent storage device(s) (506), a communication interface (508) (*e.g.*, Bluetooth interface, infrared interface, network interface, optical interface, *etc*.), and numerous other elements and functionalities that implement the features and elements of the disclosure. The computer processor(s) (502) may be an integrated circuit for processing instructions. The computer processor(s) (502) may be one or more cores, or micro-cores, of a processor. The computer processor(s) (502) includes one or more processors. The computer processor(s) (502) may include a central processing unit (CPU), a graphics processing unit (GPU), a tensor processing unit (TPU), combinations thereof, *etc.*

The input device(s) (510) may include a touchscreen, keyboard, mouse, microphone, touchpad, electronic pen, or any other type of input device. The input device(s) (510) may receive inputs from a user that are responsive to data and messages presented by the output device(s) (512). The inputs may include text input, audio input, video input, *etc.,* which may be processed and transmitted by the computing system (500) in accordance with one or more embodiments. The communication interface (508) may include an integrated circuit for connecting the computing system (500) to a network (not shown) (*e.g.*, a local area network (LAN), a wide area network (WAN) such as the Internet, mobile network, or any other type of network) or to another device, such as another computing device, and combinations thereof.

Further, the output device(s) (512) may include a display device, a printer, external storage, or any other output device. One or more of the output device(s) (512) may be the same or different from the input device(s) (510). The input device(s) (510) and output device(s) (512) may be locally or remotely connected to the computer processor(s) (502). Many different types of computing systems exist, and the aforementioned input device(s) (510) and output device(s) (512) may take other forms. The output device(s) (512) may display data and messages that are transmitted and received by the computing system (500). The data and messages may include text, audio, video, *etc.,* and include the data and messages described above in the other figures of the disclosure.

Software instructions in the form of computer readable program code to perform embodiments may be stored, in whole or in part, temporarily or permanently, on a non-transitory computer readable medium such as a solid state drive (SSD), compact disk (CD), digital video disk (DVD), storage device, a diskette, a tape, flash memory, physical memory, or any other computer readable storage medium. Specifically, the software instructions may correspond to computer readable program code that, when executed by the computer processor(s) (502), is configured to perform one or more embodiments, which may include transmitting, receiving, presenting, and displaying data and messages described in the other figures of the disclosure. Additionally, or alternatively, a computer-readable medium can include transient media such as carrier waves and transmission media.

The computing system (500) in FIG. 5A may be connected to, or be a part of, a network. For example, as shown in FIG. 5B, the network (520) may include multiple nodes (*e.g.,* node X (522) and node Y (524), as well as extant intervening nodes between node X (522) and node Y (524)). Each node may correspond to a computing system, such as the computing system shown in FIG. 5A, or a group of nodes combined may correspond to the computing system shown in FIG. 5A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (500) may be located at a remote location and connected to the other elements over a network.

The nodes (*e.g.,* node X (522) and node Y (524)) in the network (520) may be configured to provide services for a client device (526). The services may include receiving requests and transmitting responses to the client device (526). For example, the nodes may be part of a cloud computing system. The client device (526) may be a computing system, such as the computing system shown in FIG. 5A. Further, the client device (526) may include or perform all or a portion of one or more embodiments.

The computing system of FIG. 5A may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, *e.g.*, data presented as actual data values through text, or rendered by the computing device into a visual representation of the data, such as through visualizing a data model.

Thus, from one perspective, there has now been described a method which includes adding lineage metadata to a dataset of data records. The method further includes obtaining permitted data access operations of the dataset of data records from a registered data access policy. The method further includes evaluating, responsive to a write operation being permitted to the dataset of data records, the dataset of data records against registered data schemas to determine a compliance of the dataset of data records to the at least one registered data schema. The method further includes obtaining, responsive to the dataset of data records being compliant with the at least one registered data schema, at least one registered query pattern of the dataset of data records. The method further includes determining, from the at least one registered query pattern, a storage location for the dataset of data records. The method further includes storing the dataset of data records in the storage location.

As used herein, the term "connected to" contemplates multiple meanings. A connection may be direct or indirect (*e.g.*, through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.,* first, second, third, *etc*.) may be used as an adjective for an element (*i.e.,* any noun in the application). The use of ordinal numbers is not to imply or create any particular ordering of the elements, nor to limit any element to being only a single element unless expressly disclosed, such as by the use of the terms "before," "after," "single," and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

Further examples of feature combinations taught by the present disclosure are set out in the following numbered clauses:
1. A method comprising:
   adding lineage metadata to a dataset of data records;
   obtaining permitted data access operations of the dataset of data records from a registered data access policy;
   evaluating, responsive to a write operation being permitted to the dataset of data records, the dataset of data records against at least one registered data schema to determine a compliance of the dataset of data records to the at least one registered data schema;
   obtaining, responsive to the dataset of data records being compliant with the at least one registered data schema, at least one registered query pattern of the dataset of data records;
   determining, from the at least one registered query pattern, a storage location for the dataset of data records; and
   storing the dataset of data records in the storage location.
2. The method of clause 1, further comprising:
   obtaining a query directed to the dataset of data records;
   routing the query to the storage location of the dataset of data records; and
   obtaining a query result by processing the query on the dataset of data records.
3. The method of clause 2, further comprising:
   deploying the query to a production system, wherein the query is executed continuously to process the dataset of data records.
4. The method of clause 3, further comprising:
   verifying the query result based on a verification rubric, prior to deploying the query to the production system.
5. The method of any preceding clause, further comprising:
   ingesting the dataset of data records from at least one of an internal data source and an external data source.
6. The method of clause 5, further comprising:
   halting, responsive to a write operation not being permitted to the dataset of data records, ingestion of the dataset of data records.
7. The method of clause 5 or clause 6, further comprising:
   halting, responsive to the dataset of data records not being compliant with the at least one registered
   data schema, ingestion of the dataset of data records.
8. A method, comprising:
   requesting, via an integrated development environment (IDE), the data access permission to a dataset of data records;
   generating, via the IDE, a query for processing the dataset of data records;
   generating, by a universal persistence engine, a query execution plan based on a storage location of the dataset of data records;
   executing, by the universal persistence engine, the query on the dataset of data records to obtain a query result;
   generating, by the universal persistence engine, a materialized view of the query result;
   verifying the query result based on a verification rubric; and
   deploying the query to a production system, wherein the query is executed continuously to process the dataset of data records.
9. The method of clause 8, further comprising:
   ingesting the dataset of data records from at least one of an internal data source and an external data source; and
   processing, by a data lineage manager, the dataset of data records by:
      obtaining lineage metadata of the dataset of data records, and adding the lineage metadata to the dataset of data records.
10. The method of clause 8 or clause 9, further comprising:
   obtaining permitted data access operations of the dataset of data records from a registered data access policy; and
   responsive to a write operation being permitted to the dataset of records, evaluating the dataset of data records against at least one registered data schema to determine a compliance of the dataset of data records to the at least one registered data schema.
11. The method of clause 10, further comprising:
   responsive to the write operation not being permitted to the dataset of records, halting ingestion of the dataset of data records; and
   responsive to the dataset of data records not being compliant with the at least one registered data schema, halting ingestion of the dataset of data records.
12. The method of any of clauses 8 to 11, further comprising:
   obtaining, by the universal persistence engine, at least one registered query pattern of the dataset of data records;
   determining, from the at least one registered query pattern, a storage location for the dataset of data records; and
   storing the dataset of data records in the storage location.
13. A system, comprising:
   at least one computer processor;
   a data repository, comprising a universal persistence data store, and stored on a physical storage device;
   a smart data IDE application executing on the at least one computer processor;
   a universal persistence engine, executing on the at least one computer processor;
   a data definition tool, executing on the at least one computer processor; and
   a data understanding tool, executing on the at least one computer processor;
   wherein the system is configured for:
      adding, by the data understanding tool, lineage metadata to a dataset of data records,
      obtaining, by the data understanding tool, permitted data access operations of the dataset of data records from a registered data access policy,
      evaluating, by the data definition tool, the dataset of data records against at least one registered data schema to determine a compliance of the dataset of data records to the at least one registered data schema,
      obtaining, by the universal persistence engine, at least one registered query pattern of the dataset of data records,
      determining, from the at least one registered query pattern, a storage location for the dataset of data records in the universal persistence data store, and
      storing, by the universal persistence engine, the dataset of data records in the storage location.
14. The system of clause 13, wherein:
   evaluating the dataset of data records is performed responsive to a write operation being permitted to the dataset of data records; and wherein
   obtaining at least one registered query pattern is performed responsive to the dataset of data records being compliant with the at least one registered data schema.
15. The system of clause 13 or clause 14, further configured for:
   obtaining, from the smart data IDE application, a query directed to the dataset of data records;
   routing, by the universal persistence engine, the query to the storage location of the dataset of data records; and
   obtaining a query result by executing the query on the dataset of data records.
16. The system of clause 15, further configured for:
   deploying the query to a production system, wherein the query is executed continuously to process the dataset of data records.
17. The system of clause 16, further configured for:
   verifying the query result based on a verification rubric, prior to deploying the query to the production system.
18. The system of any of clauses 13 to 17, further configured for:
   ingesting the dataset of data records from at least one of an internal data source and an external data source.
19. The system of clause 18, further configured for:
   halting, responsive to a write operation not being permitted to the dataset of data records, ingestion of the dataset of data records.
20. The system of clause 18 or clause 19, further configured for:
   halting, responsive to the dataset of data records not being compliant with the at least one registered data schema, ingestion of the dataset of data records.

## Claims

1. A method comprising:
adding lineage metadata to a dataset of data records;
obtaining permitted data access operations of the dataset of data records from a registered data access policy;
evaluating, responsive to a write operation being permitted to the dataset of data records, the dataset of data records against at least one registered data schema to determine a compliance of the dataset of data records to the at least one registered data schema;
obtaining, responsive to the dataset of data records being compliant with the at least one registered data schema, at least one registered query pattern of the dataset of data records;
determining, from the at least one registered query pattern, a storage location for the dataset of data records; and
storing the dataset of data records in the storage location.

2. The method of claim 1, further comprising:
obtaining a query directed to the dataset of data records;
routing the query to the storage location of the dataset of data records; and
obtaining a query result by processing the query on the dataset of data records.

3. The method of claim 2, further comprising:
deploying the query to a production system, wherein the query is executed continuously to process the dataset of data records, and optionally verifying the query result based on a verification rubric, prior to deploying the query to the production system.

4. The method of any preceding claim, further comprising:
ingesting the dataset of data records from at least one of an internal data source and an external data source, and optionally halting, responsive to a write operation not being permitted to the dataset of data records, ingestion of the dataset of data records.

5. The method of claim 4, further comprising:
halting, responsive to the dataset of data records not being compliant with the at least one registered data schema, ingestion of the dataset of data records.

6. A method, comprising:
requesting, via an integrated development environment (IDE), the data access permission to a dataset of data records;
generating, via the IDE, a query for processing the dataset of data records;
generating, by a universal persistence engine, a query execution plan based on a storage location of the dataset of data records;
executing, by the universal persistence engine, the query on the dataset of data records to obtain a query result;
generating, by the universal persistence engine, a materialized view of the query result;
verifying the query result based on a verification rubric; and
deploying the query to a production system, wherein the query is executed continuously to process the dataset of data records.

7. The method of claim 6, further comprising:
ingesting the dataset of data records from at least one of an internal data source and an external data source; and
processing, by a data lineage manager, the dataset of data records by:
obtaining lineage metadata of the dataset of data records, and adding the lineage metadata to the dataset of data records.

8. The method of claim 6 or claim 7, further comprising:
obtaining permitted data access operations of the dataset of data records from a registered data access policy; and
responsive to a write operation being permitted to the dataset of records, evaluating the dataset of data records against at least one registered data schema to determine a compliance of the dataset of data records to the at least one registered data schema,
and optionally further comprising:
responsive to the write operation not being permitted to the dataset of records, halting ingestion of the dataset of data records; and
responsive to the dataset of data records not being compliant with the at least one registered data schema, halting ingestion of the dataset of data records.

9. The method of any of claims 6 to 8, further comprising:
obtaining, by the universal persistence engine, at least one registered query pattern of the dataset of data records;
determining, from the at least one registered query pattern, a storage location for the dataset of data records; and
storing the dataset of data records in the storage location.

10. A system, comprising:
at least one computer processor;
a data repository, comprising a universal persistence data store, and stored on a physical storage device;
a smart data IDE application executing on the at least one computer processor;
a universal persistence engine, executing on the at least one computer processor;
a data definition tool, executing on the at least one computer processor; and
a data understanding tool, executing on the at least one computer processor;
wherein the system is configured for:
adding, by the data understanding tool, lineage metadata to a dataset of data records,
obtaining, by the data understanding tool, permitted data access operations of the dataset of data records from a registered data access policy,
evaluating, by the data definition tool, the dataset of data records against at least one registered data schema to determine a compliance of the dataset of data records to the at least one registered data schema,
obtaining, by the universal persistence engine, at least one registered query pattern of the dataset of data records,
determining, from the at least one registered query pattern, a storage location for the dataset of data records in the universal persistence data store, and
storing, by the universal persistence engine, the dataset of data records in the storage location.

11. The system of claim 10, wherein:
evaluating the dataset of data records is performed responsive to a write operation being permitted to the dataset of data records; and wherein
obtaining at least one registered query pattern is performed responsive to the dataset of data records being compliant with the at least one registered data schema.

12. The system of claim 10 or claim 11, further configured for:
obtaining, from the smart data IDE application, a query directed to the dataset of data records;
routing, by the universal persistence engine, the query to the storage location of the dataset of data records; and
obtaining a query result by executing the query on the dataset of data records.

13. The system of claim 12, further configured for:
deploying the query to a production system, wherein the query is executed continuously to process the dataset of data records, and optionally verifying the query result based on a verification rubric, prior to deploying the query to the production system.

14. The system of any of claims 10 to 13, further configured for:
ingesting the dataset of data records from at least one of an internal data source and an external data source, and optionally halting, responsive to a write operation not being permitted to the dataset of data records, ingestion of the dataset of data records.

15. The system of claim 14, further configured for:
halting, responsive to the dataset of data records not being compliant with the at least one registered data schema, ingestion of the dataset of data records.
